# EUROPÄISCHE PATENTSCHRIFT

(11) **EP 3 543 568 B1**
(45) Veröffentlichungstag und Bekanntmachung des Hinweises auf die Patenterteilung: **06.01.2021**
(21) Anmeldenummer: 18162472.7
(22) Anmeldetag: 19.03.2018
(51) Int. Cl.: F16J 15/3236, F16J 15/56

(54) **DICHTRING, DICHTUNGSANORDNUNG UND VERWENDUNG EINER DICHTUNGSANORDNUNG**
SEALING RING, SEALING ARRANGEMENT AND USE OF A SEALING ARRANGEMENT
BAGUE D'ÉTANCHÉITÉ, DISPOSITIF FORMANT BAGUE D'ÉTANCHÉITÉ ET UTILISATION D'UN DISPOSITIF FORMANT BAGUE D'ÉTANCHÉITÉ

(43) Veröffentlichungstag der Anmeldung: 25.09.2019
(73) Patentinhaber: Carl Freudenberg KG, 69469 Weinheim (DE)
(72) Erfinder: MOELLER, Sascha, 68642 Bürstadt (DE); FIETZ, Roland, 35279 Neustadt-Momberg (DE); GRÖSCH, Michael, 36304 Alsfeld-Berfa (DE); JAECKEL, Jürgen, 34637 Schrecksbach (DE); BARILLAS, Gonzalo, 36304 Alsfeld-Altenburg (DE)

(56) Entgegenhaltungen:
- EP-A1- 1 959 172
- EP-A2- 0 347 587
- JP-A- 2011 196 505
- US-A1- 2010 230 904
- US-A1- 2015 246 664
- US-A1- 2017 227 128

## Beschreibung

Die Erfindung betrifft einen Dichtring in Form eines Nutrings mit den Merkmalen von Anspruch 1, eine Dichtungsanordnung mit einem solchen Dichtring gemäß den Merkmalen von Anspruch 9 sowie die Verwendung einer Dichtungsanordnung gemäß Anspruch 10.

### Stand der Technik

Zur Abdichtung in Hochdruckpumpen kommen spezielle Dichtungen zum Einsatz. Üblich ist dabei die Verwendung von Nutringen mit Flanschen und mit Spannringen als Federn, wie sie beispielsweise in der WO 2010/075576 A3 beschrieben sind. Dort dargestellt ist ein Nutring aus einem Fluorpolymer mit einem Flansch und zwei Spannringen als Federn zum Einsatz in einer Hochdruckpumpe.

Bei der Ausgestaltung des Dichtrings ist ein Kompromiss zu finden zwischen chemischer Beständigkeit, guter Elastizität und guter Extrusionsfestigkeit. Die chemische Beständigkeit ist bei den meisten Dichtungen gemäß dem Stand der Technik gegeben. Bezüglich der Elastizität und der Extrusionsfestigkeit werden jedoch Probleme gesehen. Aufgrund der üblicherweise geringen Elastizität ist der Einsatz von Federn, beispielsweise von Spannringen, erforderlich. Aufgrund der meist schlechten Extrusionsfestigkeit besteht die Gefahr, dass das Material des Dichtrings über den Dichtungsspalt hinaus in den Spalt zwischen feststehendem Gehäuse und bewegtem Maschinenelement extrudiert wird.

Die EP0347587A2 zeigt einen Wellendichtungsring zur Abdichtung sehr schnell und gegebenenfalls exzentrisch laufender Wellen für insbesondere mechanisch angetriebene Lader von Verbrennungskraftmaschinen. Er besteht massiv aus Polytetrafluorethylen, wobei der Axialschenkel und der Radialschenkel aus einem Polytetrafluorethylenrohling spanabhebend herausgearbeitet sind und wobei der Axialschenkel an seiner maschinenelementseitigen Fläche einen abgerundeten Übergang zur druckabgewandten Fläche des Radialschenkels aufweist. Der Ring ist durch seine massive Fertigung aus Polytetrafluorethylen ohne Rißbildung und Bruchbildung im Radialschenkel auch bei sehr schnell exzentrisch laufenden Wellen mit langer Lebensdauer einsetzbar.

### Aufgabenstellung

Aufgabe der vorliegenden Erfindung ist es daher, einen Dichtring zu schaffen, welcher gleichzeitig eine gute chemische Beständigkeit, eine gute Elastizität und gute Extrusionsbeständigkeit aufweist. Auch soll der Dichtring eine hohe Lebensdauer erreichen. Weitere Aufgabe ist es eine Dichtungsanordnung mit einem solchen Dichtring und die Verwendung einer solchen Dichtungsanordnung zu beschreiben.

### Technische Lösung

Gelöst wird diese Aufgabe durch einen Dichtring mit den Merkmalen von Anspruch 1. Der erfindungsgemäße Dichtring in Form eines Nutrings dient zur Abdichtung eines in Axialrichtung beweglichen Maschinenelements gegenüber einem stationären Gehäuse. Der Dichtring ist, insbesondere einteilig, aus einem thermoplastischen Kunststoff mit hoher Elastizität gefertigt. Unter hoher Elastizität wird eine hohe Rückstellfähigkeit verstanden. Der Dichtring besitzt einen radial inneren Axialschenkel mit einer dynamischen Dichtkante, einen radial äußeren Axialschenkel mit einer statischen Dichtkante und einen die beiden Axialschenkel verbindenden Radialschenkel, wobei zwischen den beiden Axialschenkeln und dem Radialschenkel eine nutförmige Vertiefung gebildet wird, welche allgemeiner als Kavität bezeichnet werden kann. Erfindungsgemäß weist der radial innere Axialschenkel an seiner maschinenelementseitigen Fläche einen abgerundeten, insbesondere weichen und stetigen Übergang zur druckabgewandten Fläche des Radialschenkels auf. Durch diese erfindungsgemäße Formgebung des Dichtrings und die Materialwahl für den Dichtring wird gewährleistet, dass der Dichtring eine gute chemische Beständigkeit, ein gutes Rückförderverhalten, eine hohe Elastizität und eine hohe Extrusionsfestigkeit aufweist. Wegen seiner guten Elastizität sind Spannringe oder Federn nicht mehr erforderlich. Oder anders ausgedrückt: Große Dehnungen führen nicht zu einer hohen plastischen (bleibenden) Verformung, sondern eben zu einer elastischen Verformung, sodass die Dichtkanten auch ohne Federelement bei allen auftretenden Betriebsbedingungen Kontakt behalten (beim Einsatz als Stangendichtung zur Stange und zum Gehäuse) und gegen den anstehenden Fluiddruck abdichten. Die mechanisch-dynamischen Eigenschaften des thermoplastischen Kunststoffs wie ein geringes Dämpfungsverhalten und ein relativ hohes Elastizitäts-Modul werden in dem erfindungsgemäßen Dichtring vorteilhaft eingesetzt. Da keine metallischen Federn mehr erforderlich sind, wird die Montage als auch die Demontage des Dichtrings deutlich vereinfacht. Ein weiterer Vorteil ergibt sich, weil eine kompaktere, d.h. kürzere Auslegung des Dichtrings in axialer Richtung ermöglicht wird. Dadurch werden die Kontaktflächen des Dichtrings zum Gleitpartner reduziert und die Reibung aufgrund des Dichtrings wird verringert. Bei einer Verwendung des Dichtrings in Analysepumpen kann zusätzlich das Totvolumen reduziert werden, wodurch die Analysezeiten in den Analysepumpen stark verkürzt werden können.

Dank der speziellen Formgebung des Dichtrings im Bereich des Übergangs wird die Extrusionsneigung des Dichtrings stark reduziert. Da der Übergang nicht stufig oder mit Fasen versehen ist, sondern eine abgerundete Formgebung besitzt, kann durch einen günstigen Kontaktpressungsverlauf die Gesamtleckage beim Einsatz des Dichtrings in einer Dichtungsanordnung verringert werden.

Erfindungsgemäß wurde erkannt, dass die Ausgestaltung der Form des Übergangs nach unterschiedlichen Konstruktionsprinzipien erfolgen kann. Gemäß einer ersten vorteilhaften Variante ist der Übergang so ausgeformt, dass er der Kurve einer Arcus-Cotangens-Funktion folgt.

In einer zweiten vorteilhaften Ausführungsvariante ist der Übergang so ausgestaltet, dass seine Form einer tangentialen Aneinanderreihung von Kreissegmenten mit sich verringerndem Radius entspricht. Zum Beispiel kann der Radius von einem Kreissegment zum nächsten tangential angereihten Kreissegment halbiert werden. Allen Prinzipien ist gemein, dass ein abgerundeter, weicher und stetiger Übergang geschaffen wird.

Erfindungsgemäß wurde erkannt, dass der Einsatz eines thermoplastischen Kunststoffs mit einer hohen chemischen Beständigkeit und einer geringen Dämpfung als besonders vorteilhaft anzusehen ist.

In besonders vorteilhafter Weiterbildung des erfindungsgemäßen Dichtrings kann der thermoplastische Kunststoff ein UHMPE (ultra high molecular weight PE), ein PEEK (Polyetheretherketon) oder ein Fluorpolymer sein, wie zum Beispiel PTFE (Polytetrafluorethylen), PFA (Perfluoralkoxy-Polymer), ETFE (Ethylen-Tetrafluorethylen-Copolymer), THV (Tetraflourethylen Hexaflourpropylen Vinyliden Flourid) oder PVDF (Polyvinylidenfluorid). Als weiter vorteilhaft wurde die Verwendung eines Polymergemischs, eines Compounds, erkannt, welches aus mindestens zwei der vorgenannten Polymere besteht.

In einer ersten Ausführungsvariante des erfindungsgemäßen Dichtrings ist im Bereich des Radialschenkels des Dichtrings ein sich radial erstreckender Flansch angeordnet.

In vorteilhafter Weiterbildung kann an dem Flansch ein Dichtwulst angeordnet sein, das heißt, auf der druckabgewandten oder der druckzugewandten Stirnseite des Flansches befindet sich ein Dichtwulst. Der Dichtwulst übernimmt in vorteilhafter Weise eine Dichtfunktion im Bereich des Flansches, so dass ein Eindringen von metallischen Kanten des Gehäuses in den Dichtring nicht mehr erforderlich ist und Spannungen reduziert werden können.

In einer alternativen vorteilhaften Ausführungsvariante des erfindungsgemäßen Dichtrings besitzt dieser keinen Flansch. Dafür ist der äußere Axialschenkel an seiner druckzugewandten Seite mit mindestens einer axial vorstehenden Noppe versehen, zur Fixierung des Dichtrings in Axialrichtung.

Die mindestens eine Noppe, welche im Bereich der statischen Dichtkante angeordnet kann, wird im eingebauten Zustand des Dichtrings in einer Dichtungsanordnungskammer, das heißt unter Verpressung des Dichtrings, eine axiale Bewegung des Dichtring verhindert. Beim Einsatz des Dichtrings in einer Dichtungsanordnung in Analysepumpen kann so auch die Messzuverlässigkeit erhöht werden, wohingegen es beim Einsatz von Dichtringen mit Flanschen in Analysepumpen gelegentlich zu Fehlmessungen kommen kann.

Erfindungsgemäß wurde erkannt, dass es vorteilhaft ist, wenn der Winkel zwischen der dynamischen Dichtkante und der Axialrichtung und/oder der Winkel zwischen der statischen Dichtkante und der Axialrichtung des Dichtrings jeweils 45° bis 70° beträgt, insbesondere 50° bis 70° und bevorzugt ca. 60°.

In Weiterbildung des erfindungsgemäßen Dichtrings kann die druckzugewandte Seite des Dichtrings zumindest teilweise mit einem chemisch hochbeständigen Material versehen sein, in Form eines Inlays, das heißt mit einem montierten Aufsatz, oder in Form einer Beschichtung, welche zum Beispiel aufgespritzt sein kann. So kann in vorteilhafter Weise der Werkstoff des Dichtrings dahingehend gewählt werden, dass eine besonders gute Elastizität und hohe Extrusionsfestigkeit erreicht wird, wohingehend die chemische Beständigkeit durch das Inlay oder die Beschichtung verbessert werden kann.

Die Erfindung betrifft auch eine Dichtungsanordnung mit einem statischen Gehäuse und als Maschinenelement einer relativ dazu hubbeweglichen Stange oder einem relativ dazu hubbeweglichen Kolben oder Plunger, also einer Kolbenstange, und einem in einem Dichtspalt zwischen Gehäuse und Maschinenelement angeordneten, wie obenstehend beschriebenen Dichtring.

Weiter betrifft die Erfindung die Verwendung einer wie vorstehend beschriebenen Dichtungsanordnung in Hochdruckpumpen, insbesondere in Prozesspumpen und Analysepumpen, welche insbesondere für agressive Fluide eingesetzt werden können.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar. Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet. Es zeigen in schematischer Darstellung
- Fig. 1: eine erste Ausführungsvariante eines erfindungsgemäßen Dichtringes
- Fig. 2: eine zweite Ausführungsvariante eines erfindungsgemäßen Dichtringes
- Fig. 3: eine dritte Ausführungsvariante eines erfindungsgemäßen Dichtringes
- Fig. 4a,b: Darstellungen zur Konstruktion des abgerundeten Übergangs eines erfindungsgemäßen Dichtringes.

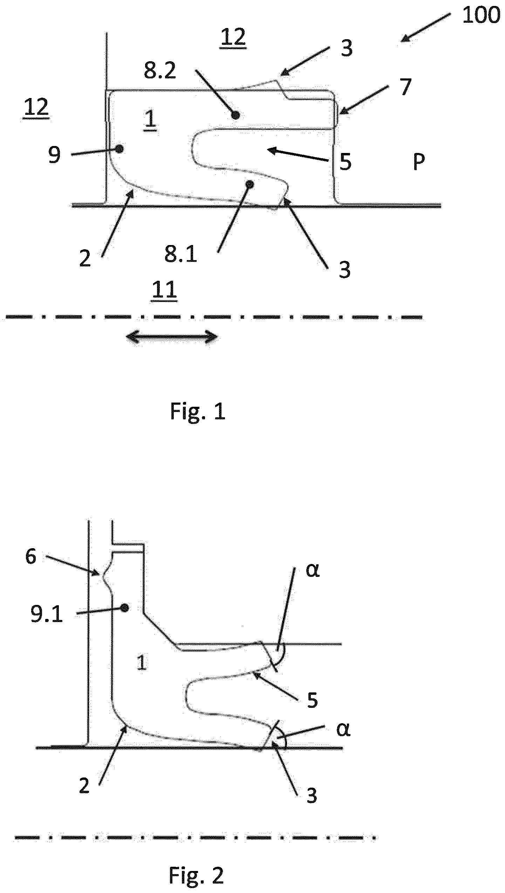

In Fig. 1 ist eine erfindungsgemäße Dichtungsanordnung 100 mit einem erfindungsgemäßen Dichtring 1 dargestellt. Der Dichtring 1 ist in einem Dichtspalt zwischen einem feststehenden Gehäuse 12 und einem hubbeweglichen Maschinenelement 11 angeordnet. Der Dichtring 1 besitzt einen sich axial erstreckenden radial inneren Axialschenkel 8.1 mit einer Dichtlippe 3 und einen zweiten sich axial erstreckenden radial äußeren Axialschenkel 8.2 mit einer Dichtlippe 3. Am radial inneren Axialschenkel 8.1 befindet sich die Dichtlippe mit der dynamischen Dichtkante 3; am radial äußeren Axialschenkel 8.2 befindet sich die Dichtlippe mit der statischen Dichtkante 3. Beide Axialschenkel 8.1, 8.2 sind durch einen sich radial erstreckenden Radialschenkel 9 miteinander verbunden. Durch den Radialschenkel 9 und die Axialschenkel 8.1, 8.2 wird eine Vertiefung 5 ausgebildet. Die Seite der Vertiefung 5 stellt die druckzugewandte Seite des Dichtrings 1 dar und in der Vertiefung 5 liegt ein Druck P an. Der Dichtring 1 ist dabei aus einem thermoplastischen Kunststoff gefertigt, beispielsweise aus einem Fluorpolymer. Der Übergang 2 der äußeren Fläche des radial inneren Axialschenkels 8.1 zur äußeren Fläche des Radialschenkels 9 ist als abgerundeter, weicher und stetiger Übergang ausgebildet. Dadurch wird eine Extrusion des Materials des Dichtrings 1 bei einer Hubbewegung des Maschinenelements 11 in den Spalt zwischen dem bewegten Maschinenelement 11 und dem feststehenden Gehäuse 12 deutlich verringert. Der Übergang der axialen Schenkel 8.1, 8.2 zueinander im Bereich des Radialschenkels 9 ist ebenfalls weiche und stetig ausgestaltet, was zu geringen Kerbspannungen in diesem Bereich führt.

Der Dichtring 1 aus Fig. 1 besitzt das zusätzliche Merkmal einer Noppe 7, welche an der druckzugewandten Seite des äußeren Axialschenkels 8.2 axial vorstehend angeordnet ist. In der Darstellung von Fig. 1 befindet sich der Dichtring 1 in einem verpressten Zustand und es wird ersichtlich, dass die Noppe 7 eine axiale Bewegung des Dichtrings 1 verhindert.

In Fig. 2 ist eine alternative Ausführungsvariante des Dichtrings 1 dargestellt. Der Dichtring 1 besitzt im Bereich des Radialschenkels 9 einen Flansch 9.1. Auf der druckabgewandten Stirnseite des Flansches 9.1 ist ein Dichtwulst 6 angeordnet. In der Darstellung von Fig. 2 ist der Dichtring 1 bereits eingebaut, jedoch noch nicht verpresst. Bei einer entsprechenden Verpressung des Dichtrings 1 durch Bewegung des Gehäuseteils 12 wird der Dichtwulst 6 verformt und erfüllt dann eine Dichtfunktion.

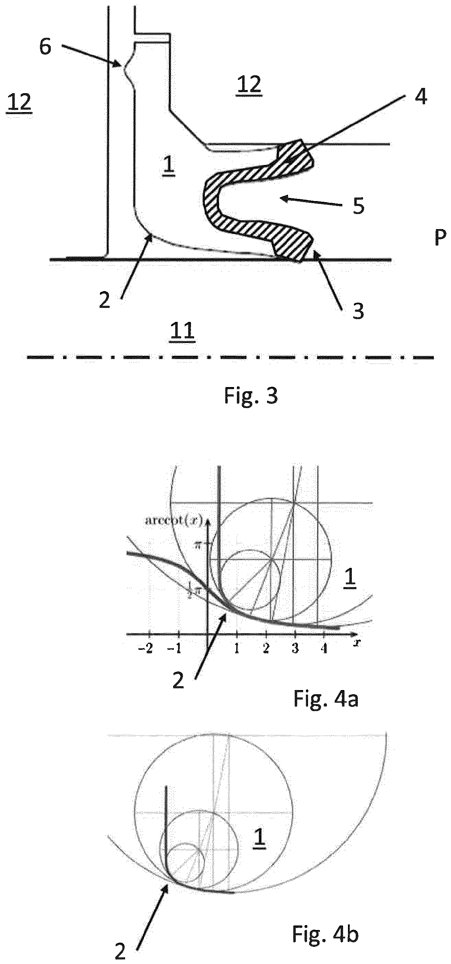

In Fig. 2 ist der Dichtlippenwinkel α angegeben. Der Dichtlippenwinkel α bezeichnet den Winkel zwischen der dynamischen Dichtkante 3 und der Axialrichtung bzw. den Winkel zwischen der statischen Dichtkante 3 und der Axialrichtung. Die Axialrichtung des Dichtrings ist durch die strichpunktierte Linie, welche gleichzeitig die Mittellinie des Maschinenelements 11 bildet, angedeutet. Der Dichtlippenwinkel α hat einen Wert von ca. 60°. Dies gilt auch für die in den Fig. 1 und 3 nicht eingezeichneten Dichtlippenwinkel a.

In Fig. 3 ist eine Weiterbildung des Dichtrings 1 dargestellt. Der Dichtring 1 besitzt in seinem druckzugewandten Bereich und insbesondere auch im Bereich der Außenfläche der Vertiefung 5 ein Inlay oder eine Beschichtung 4, welche aus einem chemisch besonders hochbeständigen Material ist.

In der Fig. 4a und 4b ist angedeutet, wie der Übergang 2 des Dichtrings 1 ausgeformt sein kann und wie eine abgerundete Form des Übergangs konstruktiv bestimmt werden kann.

Fig. 4a zeigt, dass der Übergang 2 der Form eines Arcus-Cotangens folgen kann. In Fig. 4b ist eine alternative Möglichkeit gezeigt, die Form des Übergang 2 zu gestalten: dabei werden die Radien mehrerer Teilkreise aneinander gereiht, so dass diese tangential ineinander übergehen. Gestartet wird dabei mit einem Teilkreis mit einem großen Radius, wobei die Radien von einem Teilkreis zum nächsten Teilkreis reduziert werden. Im dargestellten Beispiel von Fig. 4b wurden die Radien um den Faktor von ca. 2 reduziert, das heißt die Radien wurde in etwa halbiert. Eine weitere alternative Möglichkeit zur Ausgestaltung des Übergangs 2 des Dichtrings 1 besteht in der Anwendung der Methode der Zugdreiecke. Diese Methode wird in der DIN ISO 18459 mit Ausgabe von August 2016 in deren Abschnitt 6.5 ausführlich dargestellt. Auf deren Visualisierung wird daher an dieser Stelle verzichtet.

### Bezugszeichenliste

- 1: Dichtring
- 2: Übergang
- 3: Dichtlippe mit Dichtkante
- 4: Inlay oder Beschichtung
- 5: Vertiefung
- 6: Dichtwulst
- 7: Noppe
- 8.1: radial innerer Axialschenkel
- 8.2: radial äußerer Axialschenkel
- 9: Radialschenkel
- 9.1: Flansch
- 11: Maschinenelement (Stange / Kolben / Plunger)
- 12: Gehäuse
- 100: Dichtungsanordnung
- P: Druck
- α: Dichtlippenwinkel

## Patentansprüche

1. **Dichtring** (1) in Form eines Nutrings zur Abdichtung eines beweglichen Maschinenelements (11) gegenüber einem stationären Gehäuse (12), wobei der Dichtring (1) aus einem thermoplastischen Kunststoff gefertigt ist, aufweisend einen radial inneren Axialschenkel (8.1) mit einer dynamischen Dichtkante (3), einen radial äußeren Axialschenkel (8.2) mit einer statischen Dichtkante (3) und einen die beiden Axialschenkel (8.1, 8.2) verbindenden Radialschenkel (9), wobei zwischen den beiden Axialschenkeln (8.1, 8.2) und dem Radialschenkel (9) eine Vertiefung (5) gebildet wird und, wobei der radial innere Axialschenkel (8.1) an seiner maschinenelementseitigen Fläche einen abgerundeten Übergang (2) zur druckabgewandten Fläche des Radialschenkels (9) aufweist **dadurch gekennzeichnet,**
- **dass** der Übergang (2) der Kurve einer Arcus-Cotangens-Funktion folgt, oder
- **dass** der Übergang (2) die Form einer tangentialen Aneinanderreihung von Kreissegmenten mit sich verringerndem Radius besitzt.

2. Dichtring nach Anspruch 1, **dadurch gekennzeichnet, dass** der thermoplastische Kunststoff eine hohe chemische Beständigkeit und eine geringe Dämpfung besitzt.

3. Dichtring nach einem der vorangehenden Ansprüche, **dadurch gekennzeichnet, dass** der thermoplastische Kunststoff ein UHMPE, PEEK, PK, THV oder ein Fluorpolymer ist oder ein Polymergemisch aus mindestens zwei der vorgenannten Polymere.

4. Dichtring nach einem der vorangehenden Ansprüche, **dadurch gekennzeichnet, dass** an dem Dichtring (1) im Bereich des Radialschenkels (9) ein sich radial erstreckender Flansch (9.1) angeordnet ist.

5. Dichtring nach Anspruch 4, **dadurch gekennzeichnet, dass** an dem Flansch (9.1) ein Dichtwulst (6) angeordnet ist.

6. Dichtring nach einem der Ansprüche 1 bis 3, **dadurch gekennzeichnet, dass** der äußere Axialschenkel (8.2) an seiner druckzugewandten Seite mit mindestens einer axial vorstehenden Noppe (7) versehen ist, zur Fixierung des Dichtrings (1) in Axialrichtung.

7. Dichtring nach einem der vorangehenden Ansprüche, **dadurch gekennzeichnet, dass** der Winkel (a) zwischen der dynamischen Dichtkante (3) und der Axialrichtung und/oder der Winkel (a) zwischen der statischen Dichtkante (3) und der Axialrichtung jeweils 45° bis 70° beträgt.

8. Dichtring nach einem der vorangehenden Ansprüche, **dadurch gekennzeichnet, dass** die druckzugewandte Seite des Dichtrings (1) mit einem chemisch hochbeständigen Material versehen ist, in Form eines Inlays oder einer Beschichtung (4).

9. **Dichtungsanordnung** (100) mit einem statischen Gehäuse (12) und als Maschinenelement (11) einer relativ dazu hubbeweglichen Stange oder einem relativ dazu hubbeweglichen Kolben oder Plunger und einem Dichtring (1) nach einem der vorangehenden Ansprüche.

10. **Verwendung** einer Dichtungsanordnung (100) nach Anspruch 9 in einer Hochdruckpumpe.

## Claims

1. Sealing ring (1) in the form of a grooved ring for sealing a movable machine element (11) with respect to a stationary housing (12), wherein the sealing ring (1) is produced from a thermoplastic material, having a radially inner axial limb (8.1) with a dynamic sealing edge (3), a radially outer axial limb (8.2) with a static sealing edge (3), and a radial limb (9) which connects the two axial limbs (8.1, 8.2), wherein a depression (5) is formed between the two axial limbs (8.1, 8.2) and the radial limb (9), and wherein the radially inner axial limb (8.1) has, on its machine-element-side surface, a rounded transition (2) to that surface of the radial limb (9) which faces away from the pressure, **characterized in that**
- the transition (2) follows the curve of an arc-cotangent function, or
- the transition (2) has the form of a tangential juxtaposition of circular segments of decreasing radius.

2. Sealing ring according to Claim 1, **characterized in that** the thermoplastic material has a high chemical resistance and little damping.

3. Sealing ring according to one of the preceding claims, **characterized in that** the thermoplastic material is a UHMPE, PEEK, PK, THV or a fluoropolymer or a mixture of polymers composed of at least two of the above-mentioned polymers.

4. Sealing ring according to one of the preceding claims, **characterized in that** a radially extending flange (9.1) is arranged on the sealing ring (1) in the region of the radial limb (9).

5. Sealing ring according to Claim 4, **characterized in that** a sealing bead (6) is arranged on the flange (9.1).

6. Sealing ring according to one of Claims 1 to 3,
**characterized in that** the outer axial limb (8.2) is provided with at least one axially protruding nub (7) on its side facing the pressure, for the purpose of fixing the sealing ring (1) in the axial direction.

7. Sealing ring according to one of the preceding claims, **characterized in that** the angle (α) between the dynamic sealing edge (3) and the axial direction and/or the angle (α) between the static sealing edge (3) and the axial direction amounts to 45° to 70° in each case.

8. Sealing ring according to one of the preceding claims, **characterized in that** that side of the sealing ring (1) which faces the pressure is provided with a material which is highly resistant to chemicals in the form of an inlay or a coating (4).

9. **Sealing arrangement** (100) having a static housing (12) and, as machine element (11), a rod which can perform a stroke movement relative thereto or a piston or plunger which can perform a stroke movement relative thereto, and a sealing ring (1) according to one of the preceding claims.

10. **Use** of a sealing arrangement (100) according to Claim 9 in a high-pressure pump.

## Revendications

1. **Bague d'étanchéité** (1) sous la forme d'un joint à lèvre pour l'étanchéification d'un élément de machine mobile (11) par rapport à un boîtier stationnaire (12), la bague d'étanchéité (1) étant fabriquée en une matière plastique thermoplastique, comprenant une branche axiale radialement intérieure (8.1) munie d'un bord d'étanchéité dynamique (3), une branche axiale radialement extérieure (8.2) munie d'un bord d'étanchéité statique (3), et une branche radiale (9) reliant les deux branches axiales (8.1, 8.2), un creux (5) étant formé entre les deux branches axiales (8.1, 8.2) et la branche radiale (9), et la branche axiale radialement intérieure (8.1) comprenant sur sa surface côté élément de machine une transition arrondie (2) vers la surface détournée de la pression de la branche radiale (9), **caractérisée en ce que**
- la transition (2) suit la courbe d'une fonction arc-cotangente, ou
- la transition (2) présente la forme d'une juxtaposition tangentielle de segments de cercle de rayon décroissant.

2. Bague d'étanchéité selon la revendication 1,
**caractérisée en ce que** la matière plastique thermoplastique présente une résistance chimique élevée et un faible amortissement.

3. Bague d'étanchéité selon l'une quelconque des revendications précédentes, **caractérisée en ce que** la matière plastique thermoplastique est un UHMPE, une PEEK, une PK, un THV ou un polymère fluoré, ou un mélange polymère d'au moins deux des polymères susmentionnés.

4. Bague d'étanchéité selon l'une quelconque des revendications précédentes, **caractérisée en ce qu'une** bride s'étendant radialement (9.1) est agencée sur la bague d'étanchéité (1) dans la zone de la branche radiale (9).

5. Bague d'étanchéité selon la revendication 4,
**caractérisée en ce qu'**un bourrelet d'étanchéité (6) est agencé sur la bride (9.1).

6. Bague d'étanchéité selon l'une quelconque des revendications 1 à 3, **caractérisée en ce que** la branche axiale extérieure (8.2) est munie d'au moins un bossage dépassant axialement (7) sur son côté tourné vers la pression, pour la fixation de la bague d'étanchéité (1) en direction axiale.

7. Bague d'étanchéité selon l'une quelconque des revendications précédentes, **caractérisée en ce que** l'angle (a) entre le bord d'étanchéité dynamique (3) et la direction axiale et/ou l'angle (a) entre le bord d'étanchéité statique (3) et la direction axiale est respectivement de 45° à 70°.

8. Bague d'étanchéité selon l'une quelconque des revendications précédentes, **caractérisée en ce que** le côté tourné vers la pression de la bague d'étanchéité (1) est muni d'un matériau hautement résistant chimiquement, sous la forme d'un inlay ou d'un revêtement (4).

9. **Agencement d'étanchéité** (100) muni d'un boîtier statique (12) et, en tant qu'élément de machine (11), d'une tige pouvant effectuer un mouvement de course par rapport à celui-ci ou d'un piston ou plongeur pouvant effectuer un mouvement de course par rapport à celui-ci, et d'une bague d'étanchéité (1) selon l'une quelconque des revendications précédentes.

10. **Utilisation** d'un agencement d'étanchéité (100) selon la revendication 9 dans une pompe haute pression.
